Europäisches Patentamt

European Patent Office

Office européen des brevets

(11) Publication number: **0 518 203 A1**

(12) **EUROPEAN PATENT APPLICATION**

(21) Application number: **92109387.8**

(22) Date of filing: **03.06.92**

(51) Int. Cl.⁵: **B62J 11/00**, B62J 39/00, B62M 25/02

(30) Priority: **12.06.91 JP 43890/91 U**

(43) Date of publication of application:
**16.12.92 Bulletin 92/51**

(84) Designated Contracting States:
**DE FR GB IT**

(71) Applicant: **SHIMANO INC.**
**77, Oimatsucho 3-cho, Sakai-shi**
**Osaka(JP)**

(72) Inventor: **Nagano, Masashi**
**74-19, Midorigaoka**
**Izumi-shi, Osaka(JP)**

(74) Representative: **Säger, Manfred, Dipl.-Ing.**
**Säger & Partner Postfach 81 08 09**
**W-8000 München 81(DE)**

(54) **Apparatus for supporting a control cable for a bicycle.**

(57) A supporting apparatus for supporting a bicycle control cable (3) on a bicycle frame (5) has a support (7) including a proximal portion (7a) fixed to the frame, and a projection (7b) extending from the proximal portion; a connecter (6) mounted on the support; and a fixing device (9) for fixing the connector to the support. The connector includes an engaging portion (6b) for engaging the support, and a cable holder (6a) for supporting the control cable. The projection has an engaging bore for engaging the fixing device. The engaging portion is formed as a housing for covering the support, and defines a through bore aligned to the engaging bore of the projection. The support is provided only for the purpose of attaching the control cable to the bicycle frame.

FIG.2

## BACKGROUND OF THE INVENTION

### FIELD OF THE INVENTION

This invention relates to a structure of an apparatus for detachably attaching a control cable of a bicycle to a bicycle frame.

### DESCRIPTION OF THE RELATED ART

A known apparatus for attaching a speed control cable or the like to a bicycle frame is disclosed in Japanese Utility Model Publication No. 1990-395, for example. This apparatus includes a support shaft extending from a proximal portion welded to a bicycle frame, and a cable holder detachably attached to the support shaft for supporting a control cable extending therethrough. In this structure, an outer cover stopper is attached, besides a shift lever, to a lever shaft fixed to the bicycle frame, thus utilizing the lever shaft as a support shaft for supporting the cover stopper. However, a large cable fixing structure is required since the lever shaft must project to a sufficient extent to pivotally support the shift lever.

### SUMMARY OF THE INVENTION

An object of the present invention is to provide a small supporting apparatus specially adapted to support a control cable on a bicycle frame.

The above object is fulfilled, according to the present invention, by a supporting apparatus for supporting a bicycle control cable on a bicycle frame comprising a support including a proximal portion fixed to the frame, and a projection extending from the proximal portion; a connecter mounted on the support; and a fixing device for fixing the connector to the support. The connector includes an engaging portion for engaging the support, and a cable holder for supporting the control cable. The projection has an engaging bore for engaging the fixing device. The engaging portion is formed as a housing for covering the support, and defines a through bore aligned to the engaging bore of the projection.

The support of the control cable supporting apparatus according to the present invention is designed specially for this purpose. Thus, the projection may be formed shorter than in the prior art. As a result, this apparatus has a reduced chance of being damaged when the bicycle turns over, and is less likely to contact the feet or other parts of the rider than the conventional supporting apparatus.

Further and other objects, features and effects of the invention will become more apparent from the following more detailed description of the embodiments of the invention taken with reference to the accompanying drawings.

### BRIEF DESCRIPTION OF THE DRAWINGS

Fig. 1 is a view showing a bicycle frame, a speed control cable supported along the frame, and positions of supporting apparatus,

Fig. 2 is a perspective view of a cable supporting apparatus and part of the cable supported by the apparatus,

Fig. 3 is a side view of the portion shown in Fig. 2 in which the cable is engaged with the cable supporting apparatus,

Fig. 4 is a section taken on broken line X-X in Fig. 3,

Fig. 5 is a view similar to Fig. 4 and showing a cable supporting apparatus in another embodiment, with a cable inserted into a through hole, and

Fig. 6 is a perspective view showing a proximal portion in a further embodiment.

### DETAILED DESCRIPTION OF THE PREFERRED EMBODIMENTS

An embodiment of the present invention will be described next with reference to the drawings.

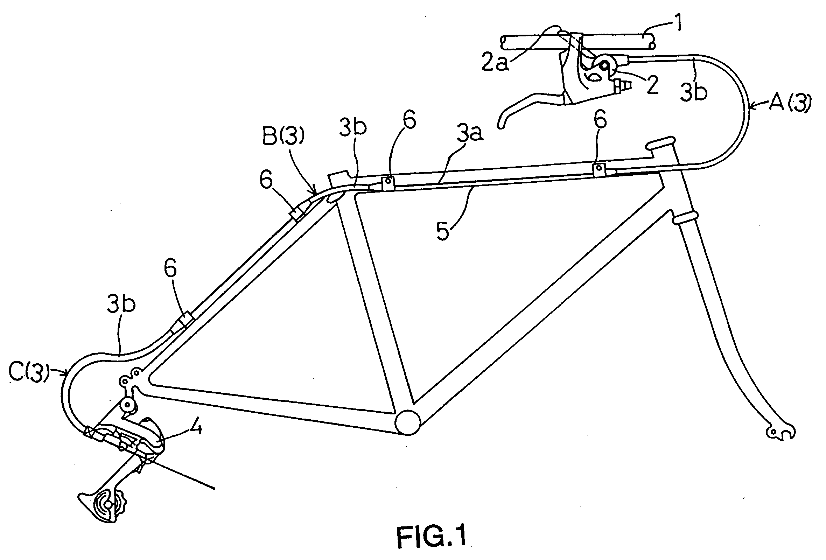

Fig. 1 shows a speed control cable 3 attached to a bicycle frame 5. In this figure, the righthand side is referred to as forward and the lefthand side as rearward. A handlebar 1 has a gear changing device 2 attached thereto for changing speed through a rear derailleur 4. The gear changing device 2 includes a shift lever 2a for pulling or relaxing the cable 3, thereby to control the derailleur 4.

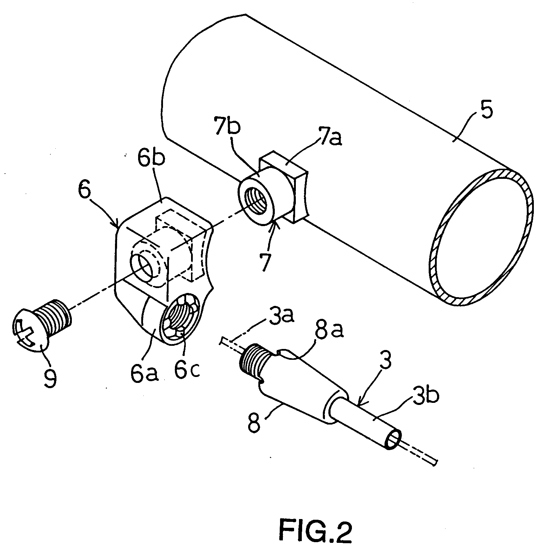

In this embodiment, the cable 3 has outer covers 3b in three curved regions A, B and C. The outer covers 3b are formed of flexible tubing to guide and protect an inner wire 3a. The cover 3b in the region C has a rear end thereof secured to the derailleur 4. The forward end of the cover 3b in the region C and the rear end of the cover 3b in the region B each have a cover stopper 6 as shown in Fig. 2, and are secured to a frame 5 through a cover support not shown. The covers 3b in the regions B and A also terminate with cover stoppers 6 at the forward end and rear end thereof, respectively. Each of these cover stoppers 6 is supported by a support shaft 7 as shown in Figs. 2 through 4. The support shaft 7 is welded to the frame 5.

The cover stopper 6 and support shaft 7 will be described with reference to Fig. 2. The support shaft 7 includes a substantially square proximal portion 7a, and a shaft portion 7b extending from the proximal portion 7a in a direction perpendicular to the frame 5. The shaft portion 7b has a threaded interior. This support shaft 7 is designed specially for supporting the cover stopper 6, with a length and radius of the shaft portion 7a sufficiently but not exceedingly large to support the cable 3 through the cover stopper 6. Specifically, the shaft portion 7b has an outside diameter larger than a length thereof in the direction perpendicular to the frame 5.

The cover stopper 6 includes a mounting portion 6b defining a through hole, and a cover receiving portion 6a extending substantially perpendicular to the through hole. As shown in broken lines in Fig. 2, the mounting portion 6b is formed as a socket having a shape substantially corresponding to the proximal portion 7a and shaft portion 7b of the support shaft 7. This structure prevents the cover stopper 6 from rotating relative to the support shaft 7.

The through hole of the mounting portion 6b receives a set screw 9 for fixing the cover stopper 6 to the support shaft 7. The set screw 9 engages the threaded interior of the shaft portion 7b of the support shaft 7 to fix the cover stopper 6 to the support shaft 7.

The cover stopper 6 is detachable from the support shaft 7 by removing the set screw 9 from the support shaft 7, thereby allowing the speed control cable 3 to be detached from the frame 5.

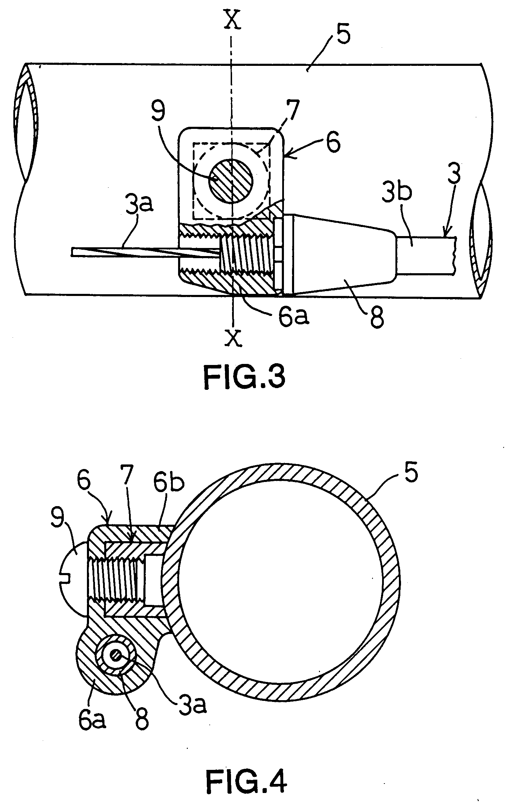

As shown in Fig. 2, the mounting portion 6b of the cover stopper 6 has a surface shaped to fit on an outer periphery of the frame 5. The socket shape of the mounting portion 6a corresponding to the proximal portion 7a and shaft portion 7b and the surface of the mounting portion 6a following the outer periphery of the frame 6 in combination prevent the cover stopper 6 from rotating relative to the support shaft 7. This structure assures a correct orientation of the cable 3. As seen from Fig. 4, the mounting portion 6b covers the support shaft 7 in a way that the support shaft 7 is out of contact with the head of the screw 9. That is, part of the mounting portion 6b lies between the support shaft 7 and the screw 9.

As best shown in Fig. 3, the cover receiving portion 6a of the cover stopper 6 defines a threaded through hole for engaging a cover holder 8 forming an end of the cover 3b. The inner wire 3a extends through this through hole.

The important aspect of this construction is that, with the support shaft 7 having a small and lightweight design, the cover stopper 6 is designed to be correspondingly small and lightweight.

Other embodiments will be described next.

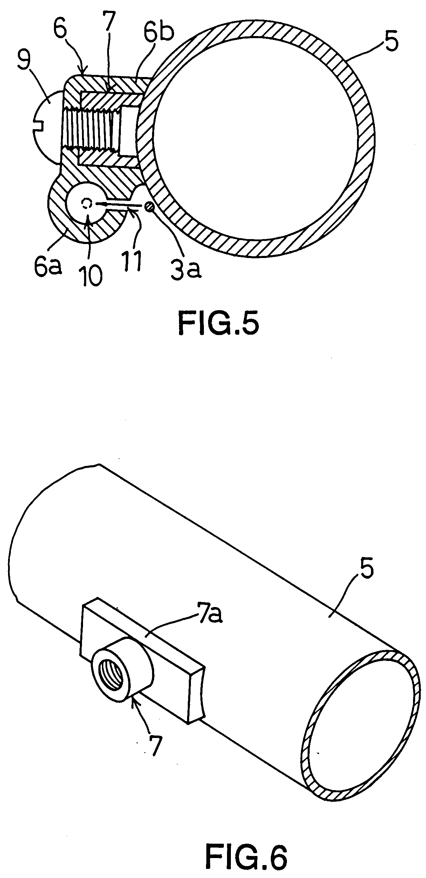

Fig. 5 shows a cover stopper in another embodiment. In this embodiment, a cover receiving portion 6a defines a slit 11 for moving the inner wire 3a into and out of a through hole 10. According to this construction, when attaching the speed control cable 3 to the cover stopper 6, a portion of the inner wire 3a exposed from the outer covers 3b may be fitted into the cover stopper 6 instead of first passing an end of the cable 3 through the hole of the cover stopper 6. The slit 11 may be formed substantially parallel to the through hole of the cover stopper 6 as shown in Fig. 5, or may be inclined with respect to the through hole to reduce the chance of the inner wire 3a falling out of the through hole.

Fig. 6 shows a modified support shaft 7. This support shaft 7 has a larger proximal portion 7a than in the first embodiment. The proximal portion 7a in this embodiment has an increased area of contact with the frame 5 to facilitate welding and enforce the resulting weld. In Fig. 6 the proximal portion 7a has a rectangular shape elongated along the frame 5. Instead, the proximal portion 7a may be elongated circumferentially of the frame 5. The shape of the proximal portion 7a is not limited to a rectangle or other polygonal shape but may be circular, elliptic or any other shape.

The outer cover 3b may be attached directly to the cover stopper 6 instead of using the cover holder 8 in between.

The foregoing embodiments have been described in relation to the structure for supporting a control cable for a rear derailleur. The present invention is applicable to a control cable for controlling a front derailleur, a front brake or a rear brake.

**Claims**

1. A supporting apparatus for supporting a bicycle control cable on a bicycle frame, comprising:

   a support including a proximal portion fixed to said frame, and a projection extending from said proximal portion:

   connecting means mounted on said support, said connecting means including an engaging portion for engaging said support, and a cable holder for supporting said control cable; and

   fixing means for fixing said connecting means to said support;

   said projection having an engaging bore for engaging said fixing means;

   said engaging portion being formed as a housing for covering said support, and defining a through bore aligned to said engaging bore of said projection;

   wherein said support has a shape determined to correspond only to said engaging portion.

2. A supporting apparatus as claimed in claim 1, wherein said projection has a cylindrical shape with an outside diameter larger than a length of said projection in a direction perpendicular to a longitudinal direction of said frame.

3. A supporting apparatus as claimed in claim 1, wherein said cable holder defines a through hole for receiving said cable.

4. A supporting apparatus as claimed in claim 1, wherein said fixing means comprises a set screw, said engaging bore of said projection being threaded to engage said set screw.

5. A supporting apparatus as claimed in claim 1, wherein said proximal portion is an approximately rectangular parallelepiped with a surface for contacting said frame being shaped to follow a surface of said frame.

6. A supporting apparatus as claimed in claim 1, wherein said engaging portion of said connecting means is placed in contact with said frame, and has a contacting surface shaped to follow a surface of said frame.

7. A supporting apparatus as claimed in claim 1, wherein said cable holder defines a through hole for receiving said cable, and a slit extending substantially parallel to said through hole.

8. A supporting apparatus as claimed in claim 1, wherein said cable holder defines a through hole for receiving said cable, and a slit inclined with respect to said through hole.

FIG.1

FIG.2

EP 0 518 203 A1

FIG.3

FIG.4

EP 0 518 203 A1

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | JP-Y-02 000 395 (...) <br> * figures 1,2 * | 1 | B62J11/00 <br> B62J39/00 <br> B62M25/02 |
| A | --- | 3,4 | |
| Y | FR-A-2 564 551 (SHIMANO) <br> * page 3, line 18 - page 4, line 34; figures 2,3 * | 1 | |
| A | --- <br> FR-A-2 652 130 (SACHS INDUSTRIES) <br> * figure 3 * | 7,8 | |
| A | --- <br> JP-Y-02 000 394 (...) <br> * figures 1-4 * | 1,2,7,8 | |
| A | --- <br> FR-A-2 634 851 (CAMPAGNOLO) <br> * abstract; figure 3 * | 1 | |
|  | ----- | | |

TECHNICAL FIELDS
SEARCHED (Int. Cl.5 )

B62J
B62K
B62M

The present search report has been drawn up for all claims

| Place of search | Date of completion of the search | Examiner |
|---|---|---|
| THE HAGUE | 29 SEPTEMBER 1992 | DENICOLAI G. |

EPO FORM 1503 03.82 (P0401)